# FASCICULE DE BREVET EUROPEEN

(11) **EP 3 143 179 B1**
(45) Date de publication et mention de la délivrance du brevet: **06.02.2019**
(21) Numéro de dépôt: 14733688.7
(22) Date de dépôt: 16.05.2014
(51) Int. Cl.: C23C 22/00, B05D 7/14, C23C 22/77, B05D 1/28, G01B 7/06, G01B 11/06, B41F 19/00, B41F 21/00, B21B 38/04, B21B 39/00, B05C 1/08, C23C 22/36

(54) **PROCEDE DE FABRICATION D'UNE BANDE D'ACIER POUR EMBALLAGE ET EQUIPEMENT ASSOCIE**
VERFAHREN ZUR HERSTELLUNG EINES STAHLBANDES ZUM VERPACKEN UND ZUGEHÖRIGE ANLAGE
PROCESS FOR MANUFACTURING A STEEL STRIP FOR PACKAGING AND ASSOCIATED EQUIPMENT

(43) Date de publication de la demande: 22.03.2017
(73) Titulaire: ArcelorMittal, 1160 Luxembourg (LU)
(72) Inventeur: STOUFF, Mathias, 43330 Saint-Ferréol-d'Auroure (FR); GLIJER, David, 57000 Metz (FR); MARQUAIS, Thierry, 60270 Gouvieux (FR); LEQUIPPE, Guillaume, 60200 Compiègne (FR); LECLERC, Thibault, 57070 Metz (FR); FRIEDRICH, Marc, 57050 Lorry les Metz (FR)
(74) Mandataire: Lavoix
(86) Numéro de dépôt international: PCT/IB2014/000745
(87) Numéro de publication internationale: WO 2015/173600

(56) Documents cités:
- WO-A2-2010/137001
- FR-A- 1 559 253
- FR-A1- 2 330 464
- JP-A- H05 115 832
- US-A1- 2010 224 286
- US-A1- 2011 017 352

## Description

L'invention concerne un procédé de fabrication en continu de bandes d'acier pour emballage revêtues d'une couche de passivation et l'équipement permettant la mise en oeuvre de ce procédé.

La terminologie « Acier pour emballage » recouvre tous les matériaux à base d'acier utilisés pour le conditionnement des produits alimentaires, des boissons et des produits techniques non alimentaires tels que les gaz aérosols ou la peinture.

Les aciers à emballage comprennent, entre autres, le fer-blanc, qui est un acier ayant une faible teneur en carbone, généralement inférieure à 0,08%, recouvert d'une couche d'étain.

Une couche de passivation est appliquée après le dépôt d'étain et permet, notamment, la limitation du développement des oxydes d'étain. La passivation peut être effectuée par dépôt d'une solution aqueuse de passivation telle qu'une solution de phosphatation, de chromage, ou de composés solubles tels que oxalate de titane, sulfate de titane, ou encore sulfate de zirconium. Le dépôt est d'abord effectué sous forme d'un film humide, la solution étant sous forme aqueuse, puis le produit revêtu est ensuite séché pour obtenir un film sec. Le séchage est généralement effectué par passage de la bande revêtue dans un tunnel équipé de buses projetant de l'air chaud en direction de la bande. L'épaisseur du fil humide déposé est en général inférieure à 5µm, pour une épaisseur de couche de passivation sèche inférieure à 10nm. En effet, la couche de passivation est mécaniquement faible et plus son épaisseur augmente, plus les risques de rupture cohésive sont importants. Cette rupture cohésive entraine des délaminations ou pertes d'adhésion des revêtements organiques, tels que vernis ou peintures, pouvant être appliqués ultérieurement.

La couche de passivation peut être déposée par un procédé dit de « spray/dip squeeze » selon lequel la surface à revêtir est mise en contact avec la solution aqueuse de passivation, par pulvérisation ou par immersion, puis la solution en excédent est éliminée à l'aide d'un rouleau d'essorage. L'inconvénient de ce procédé est que l'épaisseur du film humide déposé ne dépend pas de la quantité de solution mise en contact avec la bande mais de la vitesse de la ligne de revêtement. En effet la quantité de solution éliminée à l'aide des rouleaux d'essorage dépend, notamment, de la vitesse à laquelle la bande circule entre ces rouleaux. Par conséquent, avec ce procédé, il est difficile d'obtenir une épaisseur uniforme de couche de passivation quelle que soit la vitesse de la ligne.

Un autre procédé de dépôt d'une couche de passivation consiste à pulvériser sur la bande la solution aqueuse de passivation sous forme d'un flux uniforme de gouttes générées par des disques rotatifs, puis à lisser la couche de passivation à l'aide d'un rouleau de lissage. Ce procédé présente l'avantage que l'épaisseur du film humide déposé peut être maintenue constante même en cas de variation de la vitesse de ligne, en ajustant le débit de solution pulvérisée par les disques rotatifs. Cependant, le lissage homogène de la solution dépend intimement du temps nécessaire aux gouttes pour former un film liquide homogène et de la force de contact entre le rouleau de lissage et la bande qui n'est pas facilement contrôlable en raison de l'usure des rouleaux, des variations de la planéité de la bande et des tolérances de géométrie et d'alignement des rouleaux. On observe donc des défauts d'homogénéité de l'épaisseur de la couche de passivation qui ne peuvent être tolérés pour des applications en emballage.

Pour pallier ces problèmes d'homogénéité, il est possible d'augmenter la quantité de solution pulvérisée par les disques rotatifs mais cela conduit à l'obtention d'une épaisseur moyenne de film humide plus élevée induisant des problèmes de séchage. En effet, la quantité d'eau à évaporer pour atteindre l'épaisseur sèche de couche de passivation requise et pour éviter la présence d'humidité résiduelle sur la bande, est plus importante. Une possibilité est alors d'augmenter le temps de passage de la bande dans l'installation de séchage, par ralentissement de la ligne, ce qui pose des problèmes de productivité, notamment pour ce type de lignes de fabrication qui fonctionnent en général à une vitesse supérieure ou égale à 400 m/min. Une autre solution pourrait être d'augmenter la longueur du dispositif de séchage, ce qui pose des problèmes d'encombrement de la ligne. Une autre possibilité consiste à augmenter la température de l'air projeté vers la bande, mais cette augmentation entraîne une augmentation de la consommation d'énergie et une dégradation de la solution de passivation.

Chacun des documents US 2011017352 A, US2010224286, WO 2010137001 A2 et JP H05115832 A décrit des procédés pour appliquer des couches de passivation dont l'épaisseur est inférieure à 3 µm avec des solutions aqueuses de passivation sur des bandes d'acier défilant en continu a des vitesses élevées. Des équipements sont également décrits pour la mise en oeuvre des procédés.

Le but de l'invention est de fournir un procédé ne présentant pas les inconvénients précédemment cités. Le but de l'invention est donc notamment de fournir un procédé permettant de déposer une couche de passivation d'épaisseur constante quelle que soit la vitesse de la ligne de fabrication.

A cet effet, l'invention a pour objet un procédé de fabrication selon la revendication 1.

Ce procédé de fabrication peut également comprendre les caractéristiques des revendications 2 à 8, prises isolément ou combinaison.

L'invention a également pour objet un équipement pour la mise en oeuvre de ce procédé selon la revendication 9.

Cet équipement peut également comprendre les caractéristiques des revendications 10 à 13, prises isolément ou en combinaison.

D'autres caractéristiques et avantages de l'invention apparaitront à la lecture de la description qui va suivre.

Afin d'illustrer l'invention, des essais ont été réalisés et vont être décrits à titre d'exemples non limitatifs, notamment en référence aux figures suivantes :
La figure 1 représente un équipement de fabrication d'une bande d'acier pour emballage selon un mode de réalisation de l'invention.
La figure 2 représente un dispositif de revêtement selon un mode de réalisation de l'invention.
Les figures 3A et 3B sont des photographies, réalisées à l'aide d'un équipement SIMS, de films de passivations déposés par un procédé, respectivement, selon l'art antérieur et selon l'invention.
La figure 4 est un graphique double, le premier illustrant la vitesse de la ligne de fabrication en fonction du temps et le second, l'épaisseur du film humide de passivation en fonction de ce même temps.
La figure 5 est une courbe représentant l'épaisseur du film humide de passivation déposé par un procédé de fabrication selon l'invention en différents points de la bande pris dans le sens transverse.

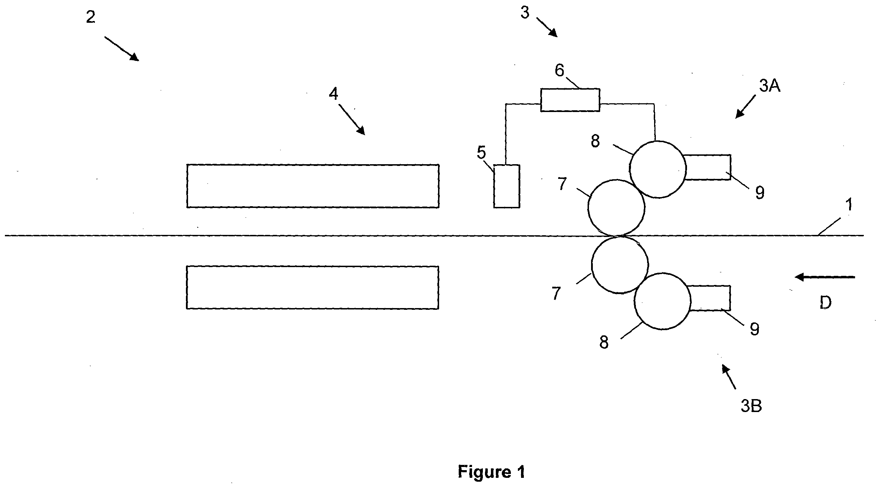

La figure 1 représente une bande d'acier 1 en défilement dans une installation de revêtement 2, selon une direction D. La bande 1 circule d'abord dans un dispositif de revêtement 3 destiné à appliquer un film humide de solution aqueuse de passivation puis dans une unité de séchage 4 destinée à éliminer l'humidité contenue dans ce film humide. Un dispositif 5 de mesure de l'épaisseur de film humide déposé est situé entre le dispositif de revêtement 3 et l'unité de séchage 4 et est relié à une unité 6 de commande du dispositif de revêtement 3.

Dans le mode de réalisation de la figure 1, le dispositif de revêtement 3 est apte à revêtir simultanément les deux faces de la bande, mais dans un mode de réalisation alternatif le dispositif de revêtement 3 peut n'être constitué que de la moitié supérieure 3A ou inférieure 3B du dispositif de façon à ne revêtir qu'une seule face de la bande.

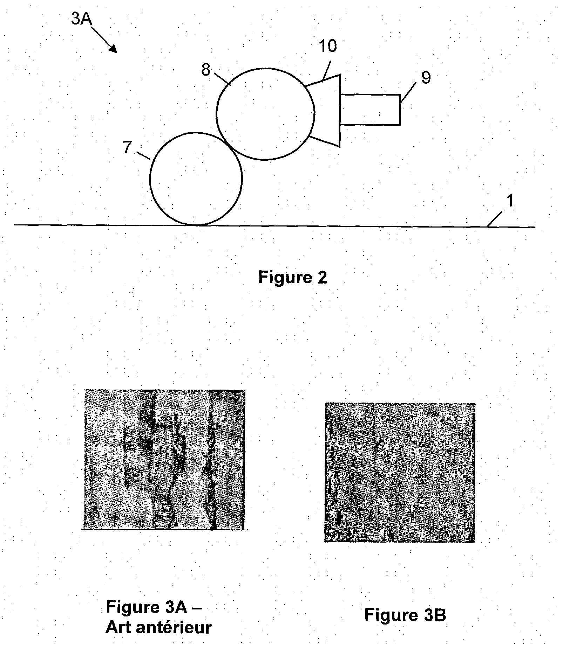

Un mode de réalisation de la partie supérieure 3A du dispositif de revêtement 3 est illustré en figure 2. La partie inférieure 3B n'est pas décrite car symétrique par rapport à la bande 1 à la partie supérieure 3A.

Ce dispositif est constitué d'un premier rouleau, dit rouleau de transfert 7. Ce rouleau de transfert 7 est d'une part en contact avec la bande 1 et d'autre part avec un second rouleau, dit rouleau d'enduction 8. Le rouleau d'enduction 8 est en contact avec le rouleau de transfert 7 et avec un bac 9 contenant la solution aqueuse de passivation à déposer sur la bande 1. Dans le mode de réalisation de la figure 2 le bac 9 est équipé d'un dispositif 10 apte à essorer la solution sur la surface du rouleau d'enduction 8.

Lors du processus de fabrication, le rouleau d'enduction 8 est en rotation et trempe dans le bac 9 contenant la solution aqueuse de passivation. Cette solution aqueuse a une viscosité proche de celle de l'eau, et inférieure à 1,5.10⁻³ Pa.s à 20°C. Il peut s'agir, par exemple, d'une solution aqueuse de silane, de chrome trivalent ou d'une solution aqueuse de Bonderite®. La rotation du rouleau d'enduction 8 peut s'effectuer indifféremment dans le sens des aiguilles d'une montre ou dans le sens inverse.

Conformément à l'invention, le rouleau d'enduction 8 présente une pluralité d'alvéoles de forme hexagonale, dont la linéature est comprise entre 50 et 200 lignes par centimètre et dont le volume est compris entre 5.10⁻⁶ et 10.10⁻⁶ m³ par mètre carré de surface de rouleau, et de préférence entre 5.10⁻⁶ et 7.10⁻⁶ m³ par mètre carré de surface de rouleau.

Ces caractéristiques de gravure du rouleau d'enduction 8 permettent de déposer la quantité requise de solution aqueuse de passivation pour obtenir l'épaisseur de film humide de passivation requise, et identique sur toute la surface de la bande.

Les alvéoles du rouleau d'enduction 8 sont remplies de solution aqueuse de passivation. Le dispositif d'essorage 10 permet d'assurer que le rouleau 8 est enduit de la quantité nécessaire de solution à déposer pour obtenir l'épaisseur de film humide requise. Ce dispositif 10 peut est peut être, par exemple, constitué de deux lames, la première lame étant située à l'entrée du rouleau 8 dans le bac 9 et permettant d'enlever les résidus de solution aqueuse du précédent passage du rouleau 8 dans le bac 9, et la seconde lame étant située à la sortie du rouleau 8 du bac 9 et permettant d'essorer la solution en excédent. La première lame est, par exemple en plastique, et la seconde en acier inoxydable ou en fibre de carbone. Le dispositif 10 peut aussi être constitué d'une lame simple, par exemple en acier inoxydable, située à la sortie du rouleau 8 du bac 9.

La surface du rouleau d'enduction 8 est, par exemple, en céramique, et les alvéoles sont, par exemple, gravées à l'aide d'un laser ou d'un outillage mécanique.

Après son passage dans le bac 9, la surface du rouleau d'enduction 8 enduite de solution aqueuse entre en contact avec le rouleau de transfert 7 lui-même animé d'un mouvement de rotation inverse à celui du rouleau d'enduction 8.

Le rouleau de transfert 7, ou du moins sa surface, est de préférence constitué(e) d'un matériau permettant un transfert optimal de la solution, c'est-à-dire un transfert minimisant les pertes de solution dues par exemple à une absorption par le matériau constitutif du rouleau ou de sa surface, ou au contraire par un glissement trop important de la solution sur la surface du rouleau. Ce matériau doit également présenter une résistance chimique à la corrosion, ainsi qu'une résistance mécanique à l'usure. Le rouleau de transfert 7 est, par exemple, en élastomère, et, de préférence, en polyéthylène chlorosulfoné ou Hypalon®.

La pression de contact entre le rouleau d'enduction 8 et le rouleau de transfert 7 doit être suffisante pour transférer la solution aqueuse de passivation du rouleau d'enduction 8 vers le rouleau de transfert 7 mais ne doit pas être trop importante pour ne pas causer des éclaboussures qui entraîneraient des pertes de solution et donc un transfert non optimal de la solution. Cette pression entre les deux rouleaux 7, 8 est appliquée, par exemple, à l'aide d'au moins un vérin (non représenté) monté sur le rouleau d'enduction 8. La force totale F_{RR} appliquée au rouleau 8 est comprise entre 1500 et 3000 N par mètre de largeur de bande 1.

Suite à ce contact, le rouleau de transfert 7 est enduit de la solution aqueuse de passivation qu'il va venir déposer sur la bande 1.

La pression de contact entre le rouleau de transfert 7 et la bande 1 ne doit pas être trop importante, au risque d'essorer le film humide de solution de passivation déposé, ni trop faible, au risque de ne pas mouiller suffisamment la bande avec la solution. De plus une pression minimale doit être exercée par le rouleau sur la bande pour compenser les éventuels défauts de planéité de cette dernière. Cette pression entre le rouleau de transfert 7 et la bande 1 est appliquée, par exemple, à l'aide d'au moins un vérin (non représenté) monté sur le rouleau de transfert 7. La force totale F_{TB} appliquée au rouleau 7 est préférentiellement comprise entre 3000 et 5000 N par mètre de largeur de bande 1.

La vitesse de rotation du rouleau de transfert 7 et du rouleau d'enduction 8 peut être synchronisée à la vitesse de déplacement de la bande 1.

Dans un mode réalisation de l'invention, on mesure l'épaisseur du film humide de couche de passivation déposé à l'aide du dispositif 5 de mesure d'épaisseur. Si l'épaisseur mesurée est inférieure à une épaisseur cible on augmente alors en conséquence la concentration de la solution aqueuse contenue dans le bac 9, et inversement.

En complément, ou dans un autre mode de réalisation de l'invention, la vitesse de rotation du rouleau d'enduction 8 peut être commandée par la boîte de commande 6 illustrée en figure 1. Cette boîte de commande 6 est reliée au dispositif 5 de mesure d'épaisseur du film humide de couche de passivation. Si l'épaisseur est inférieure à une épaisseur cible, la vitesse du rouleau d'enduction 8 est augmentée, et inversement.

La mesure d'épaisseur peut être effectuée, par exemple à l'aide d'une jauge à rayonnement électromagnétique. Ces jauges sont de préférence installées au plus près du dispositif de revêtement 3, car l'évaporation de l'humidité du film est très rapide et peut induire une variation importante dans les mesures.

L'épaisseur du film humide de passivation déposé est en général inférieure à 3µm, de préférence inférieure à 1,5µm.

Suite à l'étape de dépôt de la couche aqueuse de passivation, la bande est soumise à une étape de séchage. Cette étape de séchage est réalisée à l'aide d'un dispositif de séchage 4. Ce dispositif 4 est, par exemple un tunnel de séchage équipé de buses projetant de l'air en direction de la bande revêtue, à une température comprise entre 80 et 190°C. De préférence l'air projeté a une température comprise entre 80 et 150°C et un taux d'humidité inférieur à 15%. Le contrôle du taux d'humidité de l'air projeté permet de diminuer la température de l'air utilisé, ce qui représente des gains en termes d'énergie utilisée pour le chauffage de l'air, mais aussi des gains en termes de risques de dégradation de la couche de passivation. Ce contrôle est effectué, par exemple, à l'aise de buses d'extraction situées en plusieurs endroits du tunnel.

Suite à cette étape de séchage, l'épaisseur du film sec de passivation est en général inférieure à 15nm, de préférence inférieure à 8 nm.

Dans un autre mode de réalisation, non représenté, la bande peut être soumise, préalablement à l'étape de séchage, à une étape de préchauffage, à une température inférieure à 80°C. Cette étape de préchauffage est réalisée, par exemple, à l'aide d'un chauffage à induction ou à rayonnement infrarouge.

Les figures 3A et 3B sont des photographies réalisées à l'aide d'un spectromètre de masse à ionisation secondaire ou SIMS.

Pour les deux photographies il s'agit d'un dépôt de solution aqueuse de Bonderite®1456 réalisé sur un acier fer-blanc. Dans les deux cas la vitesse de la ligne, la concentration de la solution aqueuse de Bonderite® 1456, et le mode de séchage sont identiques. Dans le premier cas, photographie 3A, la Bonderite® 1456 a été déposée à l'aide du procédé à disques rotatifs selon l'art antérieur, tel que décrit précédemment. Dans le second cas, photographie 3B, elle a été déposée à l'aide du procédé selon l'invention.

Sur ces deux photographies, plus les zones sont foncées, plus la concentration en Bonderite® 1456, et donc l'épaisseur de la couche de passivation déposée, est importante. Sur la figure 3A on observe des zones foncées caractéristiques d'une épaisseur de couche de passivation non constante sur la surface de l'échantillon, alors que de telles zones ne sont pas observées sur la figure 3B. Le procédé selon l'invention permet donc d'obtenir une épaisseur de couche de passivation constante, ce qui n'est pas le cas de l'art antérieur.

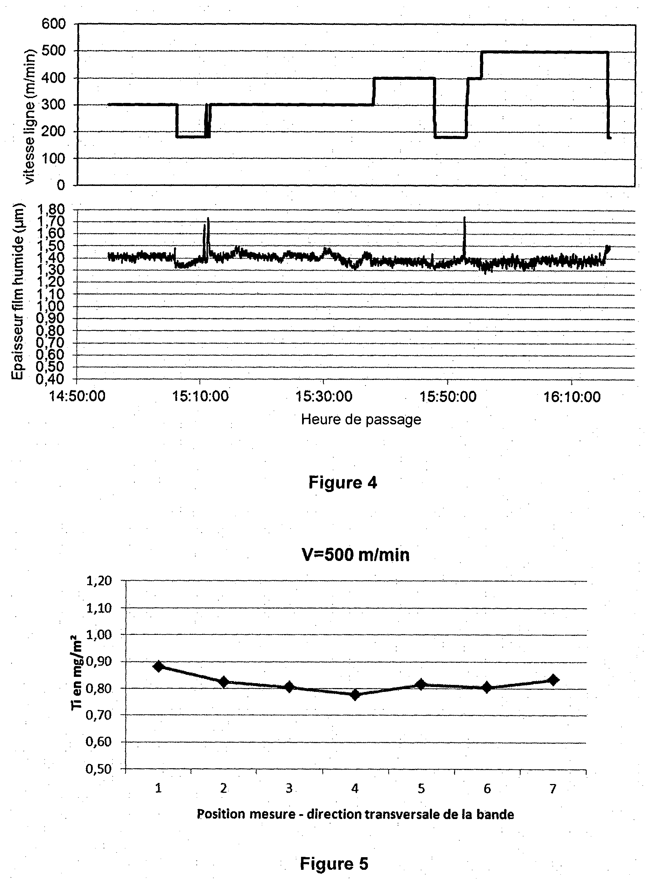

La figure 4 comprend deux graphiques. Le premier représente la vitesse d'une ligne de fabrication selon l'invention en fonction du temps. Le second représente l'épaisseur du film humide de passivation déposé en fonction du temps sur cette ligne de fabrication.

La ligne de fabrication utilisée pour cet essai comporte un dispositif de revêtement permettant de déposer une solution aqueuse de passivation sur la face supérieure de la bande d'acier. Ce dispositif de revêtement est constitué d'un rouleau de transfert en Hypalon®, d'un rouleau d'enduction dont la surface est en céramique et comporte une pluralité d'alvéoles de forme hexagonale, une linéature d'environ 160 lignes par centimètre, et dont le volume total est de 7,5.10⁻⁶ m³ par mètre carré de surface de rouleau. Ce rouleau d'enduction trempe dans un bac contenant une solution aqueuse de Bonderite® 1456, à une concentration d'environ 8% en volume de solution commerciale de Bonderite® 1456. Le bac est équipé d'un dispositif d'essorage comprenant une lame en plastique en entrée du bac et une lame en acier inoxydable en sortie.

Comme on peut le voir sur le premier graphique la vitesse de la ligne varie de 180 à 500m/min. Sur le deuxième graphique on observe que malgré cette variation de vitesse l'épaisseur du film humide de passivation déposé reste constante à ±0,3µm. Les pics observés correspondent à l'étape de soudage de deux bandes successives et ne sont donc pas pris en compte

Le procédé selon l'invention permet donc d'obtenir une épaisseur constante de couche de passivation, indépendamment de la vitesse de la ligne de fabrication.

La figure 5 est un graphique sur lequel est représentée l'épaisseur du film humide de passivation en différents points de la bande, pris à différentes positions dans la direction transverse de la bande. Le film de passivation est un film de Bonderite® 1456 déposé dans les mêmes conditions que celles décrites en figure 4.

L'épaisseur de la bande est ici exprimée en milligramme de titane par mètre carré de surface car l'épaisseur de la Bonderite®1456 est directement reliée à son poids en titane.

Sur ce graphique on observe que l'épaisseur du film de Bonderite® 1456 avant séchage varie entre 0,78 et 0,88mg/m² Ti d'un bord à l'autre de la bande. Le procédé selon l'invention permet donc d'obtenir une épaisseur constante de couche de passivation à ±0,15 mg/m² Ti.

## Revendications

1. Procédé de fabrication en continu de bandes d'acier pour emballage revêtues d'une couche de passivation dans lequel on dépose sur une des faces de ladite bande une couche de solution aqueuse de passivation dont l'épaisseur est inférieure à 3 µm et dont la viscosité est inférieure à 1,5.10⁻³ Pa.s à 20°C, ledit dépôt étant effectué au moyen d'un rouleau de transfert en contact, d'une part, avec la bande et, d'autre part, avec un second rouleau d'enduction dont la surface présente une pluralité d'alvéoles de forme hexagonale, dont la linéature est comprise entre 50 et 200 lignes par centimètre et dont le volume total est compris entre 5.10⁻⁶ et 10.10⁻⁶ m³ par mètre carré de surface de rouleau, ledit rouleau d'enduction étant alimenté en solution aqueuse de passivation par trempage dans un bac muni de moyens d'essorage et ladite bandé défilant à une vitesse supérieure ou égale à 400 m/min, la force totale exercée sur le rouleau d'enduction pour la mise en contact avec le rouleau de transfert étant comprise entre 1500N et 3000N par mètre de largeur de bande d'acier revêtue.

2. Procédé de fabrication selon la revendication 1, selon lequel la force totale exercée sur le rouleau de transfert pour la mise en contact avec la bande d'acier est comprise entre 3000 et 5000N par mètre de largeur de bande d'acier revêtue.

3. Procédé de fabrication selon l'une quelconque des revendications précédentes, selon lequel le rouleau d'enduction est en contact avec des moyens d'essorage permettant d'éliminer l'excès de solution aqueuse de passivation à la sortie du bac.

4. Procédé de fabrication selon l'une quelconque des revendications précédentes selon lequel, après le dépôt de la solution aqueuse de passivation, la bande revêtue est soumise à une étape de séchage.

5. Procédé de fabrication selon la revendication 4, selon lequel l'étape de séchage est effectuée par soufflage d'air en direction de la bande, l'air soufflé ayant une température comprise entre 80 et 150°C et un taux d'humidité inférieur à 15%.

6. Procédé de fabrication selon la revendication 4 ou 5, selon lequel préalablement à l'étape de séchage, la bande est soumise à une étape de préchauffage à une température inférieure à 80°C.

7. Procédé de fabrication selon l'une quelconque des revendications précédentes, selon lequel la concentration de la solution aqueuse en élément de passivation est contrôlée en fonction d'une mesure de l'épaisseur du film de passivation avant séchage.

8. Procédé de fabrication selon la revendication 7, selon lequel l'épaisseur du film de passivation déposé, après séchage, est inférieure à 15nm.

9. Equipement pour la mise en oeuvre d'un procédé selon l'une quelconque des revendications précédentes, comprenant :
- un rouleau de transfert (7),
- un rouleau d'enduction (8) en contact avec le rouleau de transfert (7), et présentant une pluralité d'alvéoles de forme hexagonale, dont la linéature est comprise entre 50 et 200 lignes par centimètre et dont le volume est compris entre 5.10⁻⁶ et 10.10⁻⁶ m³ par mètre carré de surface de rouleau ;
- un bac (9) contenant une solution aqueuse de passivation et dans lequel trempe le rouleau d'enduction (8).

10. Equipement selon la revendication précédente, selon lequel le rouleau de transfert (7) est en élastomère.

11. Equipement selon l'une quelconque des revendications précédentes, selon lequel le rouleau d'enduction (8) comprend un revêtement céramique gravé au laser.

12. Equipement selon l'une quelconque des revendications précédentes, selon lequel le bac (9) comprend un dispositif d'essorage (10) comprenant au moins une lame.

13. Equipement selon l'une quelconque des revendications précédentes, comprenant en outre des jauges à rayonnement magnétique (5) permettant de mesurer l'épaisseur du film de solution aqueuse de passivation avant séchage.

## Patentansprüche

1. Verfahren zur kontinuierlichen Herstellung von Stahlbändern für Verpackung, die mit einer Passivierungsschicht beschichtet sind, wobei man auf eine der Seiten des besagten Bandes eine Schicht aus wässriger Passivierungslösung aufbringt, deren Dicke kleiner als 3pm ist und deren Viskosität kleiner als 1,5.10⁻³ Pa.s bei 20°C ist, wobei das besagte Aufbringen durchgeführt wird mittels einer Übertragungswalze, die einerseits mit dem Band und andererseits mit einer zweiten Walze zur Beschichtung in Kontakt ist, deren Oberfläche eine Mehrzahl von Kavitäten von hexagonaler Form hat, deren Rasterung zwischen 50 und 200 Reihen pro Zentimeter beträgt und deren Gesamtvolumen zwischen 5.10⁻⁶ und 10.10⁻⁶ m3 pro Quadratmeter Walzenoberfläche beträgt, wobei die besagte Walze zur Beschichtung mit wässriger Passivierungslösung versorgt wird durch Eintauchen in ein Becken, das mit Abwelkmitteln versehen ist, wobei das besagte Band läuft mit einer Geschwindigkeit von größer oder gleich 400 m/min, wobei die Gesamtkraft, die auf die Walze zur Beschichtung ausgeübt wird, um diese in Kontakt mit der Übertragungswalze zu betreiben, zwischen 1500N und 3000N pro Breitenmeter des beschichteten Stahlbands beträgt.

2. Verfahren zur Herstellung gemäß Anspruch 1, wobei die Gesamtkraft, die auf die Übertragungsrolle ausgeübt wird, um diese in Kontakt mit dem Stahlband zu betreiben zwischen 3000 und 5000N pro Breitenmeter des beschichteten Stahlbands liegt.

3. Verfahren zur Herstellung gemäß irgendeinem der vorhergehenden Ansprüche, wobei die Walze zur Beschichtung in Kontakt mit den Abwelkmitteln ist, wodurch ermöglicht wird, einen Überschuss an wässriger Passivierungslösung am Ausgang des Beckens zu vermeiden.

4. Verfahren zur Herstellung irgendeines der vorhergehenden Ansprüche, wobei nach dem Aufbringen der wässrigen Passivierungslösung das beschichtete Band einem Trocknungsschritt unterworfen wird.

5. Verfahren zur Herstellung gemäß Anspruch 4, wobei der Trocknungsschritt durchgeführt wird mittels Luftblasens in Richtung zu dem Band, wobei die Blas-Luft eine Temperatur zwischen 80 und 150°C und einen Feuchtegehalt kleiner als 15% hat.

6. Verfahren zur Herstellung gemäß Anspruch 4 oder 5, wobei vor dem Trocknungsschritt das Band einem Vorerwärmungsschritt bei einer Temperatur kleiner 80°C unterworfen wird.

7. Verfahren zur Herstellung gemäß irgendeinem der vorhergehenden Ansprüche, wobei die Konzentration des Passivierungselements in der wässrigen Lösung gesteuert wird in Abhängigkeit einer Messung der Dicke des Passivierungsfilms vor dem Trocknen.

8. Verfahren zur Herstellung gemäß Anspruch 7, wobei die Dicke des aufgebrachten Passivierungsfilms nach der Trocknung kleiner als 15nm ist.

9. Einrichtung zum Durchführen eines Verfahrens gemäß irgendeinem der vorhergehenden Ansprüche, aufweisend:
- eine Übertragungswalze (7),
- eine Walze zur Beschichtung (8), die in Kontakt ist mit der Übertragungswalze (7) und die eine Mehrzahl von Kavitäten hexagonaler Form hat, deren Rasterung zwischen 50 und 200 Reihen pro Zentimeter beträgt und deren Volumen zwischen 5.10⁻⁶ und 10.10⁻⁶ m³ pro Quadratmeter Walzenoberfläche beträgt,
- ein Becken (9), das eine wässrige Passivierungslösung enthält und in welches die Walze zur Beschichtung (8) eintaucht.

10. Einrichtung gemäß dem vorhergehenden Anspruch, wobei die Übertragungswalze (7) aus Elastomer ist.

11. Einrichtung gemäß irgendeinem der vorigen Ansprüche, wobei die Walze zur Beschichtung (8) eine lasergravierte keramische Beschichtung aufweist.

12. Einrichtung gemäß irgendeinem der vorhergehenden Ansprüche, wobei das Becken (9) eine Abwelkvorrichtung (10) aufweist, die wenigstens eine Klinge hat.

13. Einrichtung gemäß irgendeinem der vorhergehenden Ansprüche, ferner aufweisend Magnetstrahl-Messeinrichtungen (5), die ermöglichen, die Film-Dicke der wässrigen Passivierungslösung vor dem Trocknen zu messen.

## Claims

1. Method for the continuous manufacturing of steel strips for packaging coated with a passivation layer, in which a layer of aqueous passivation solution, the thickness of which is less than 3 µm and the viscosity of which is less than 1.5·10⁻³ Pa·s at 20°C, is deposited on one of the faces of said strip, said deposition being carried out by means of a transfer roller in contact, on the one hand, with the strip and, on the other hand, with a second coating roller, the surface of which has a plurality of hexagonally shaped cells, the line count of which is between 50 and 200 lines per centimetre and the total volume of which is between 5·10⁻⁶ and 10·10⁻⁶ m³ per square metre of roller surface, said coating roller being supplied with aqueous passivation solution by dipping in a tank equipped with wiping means and said strip running at a speed greater than or equal to 400 m/min, the total force exerted on the coating roller to contact the transfer roller being between 1500 N and 3000 N per metre of width of coated steel strip.

2. Manufacturing method according to claim 1, wherein the total force exerted on the transfer roller to contact the steel strip is between 3000 and 5000 N per metre of width of coated steel strip.

3. Manufacturing method according to either one of the preceding claims, wherein the coating roller is in contact with wiping means making it possible to eliminate excess aqueous passivation solution at the exit from the tank.

4. Manufacturing method according to any one of the preceding claims, wherein, after the deposition of the aqueous passivation solution, the coated strip is subjected to a drying step.

5. Manufacturing method according to claim 4, wherein the drying step is carried out by blowing air in the direction of the strip, the blown air having a temperature from 80 to 150°C and a moisture content of less than 15%.

6. Manufacturing method according to claim 4 or 5, wherein, prior to the drying step, the strip is subjected to a step of pre-heating to a temperature below 80°C.

7. Manufacturing method according to any one of the preceding claims, wherein the concentration of a passivation element in the aqueous solution is controlled as a function of a measurement of the thickness of the passivation film before drying.

8. Manufacturing method according to claim 7, wherein the thickness of the passivation film deposited is less than 15 nm after drying.

9. Apparatus for the implementation of a method according to any one of the preceding claims, comprising:
- a transfer roller (7);
- a coating roller (8) contacting the transfer roller (7), and having a plurality of hexagonally shaped cells, the line count of which is from 50 to 200 lines per centimetre and the volume of which is from 5·10⁻⁶ to 10·10⁻⁶ m³ per square metre of roller surface;
- a tank (9) containing an aqueous passivation solution and being dipped into by the coating roller (8).

10. Apparatus according to the preceding claim, wherein the transfer roller (7) is made of an elastomer.

11. Apparatus according to any one of the preceding claims, wherein the coating roller (8) includes a laser etched ceramic coating.

12. Apparatus according to any one of the preceding claims, wherein the tank (9) includes a wiping device (10) comprising at least one blade.

13. Apparatus according to any one of the preceding claims, further comprising magnetic radiation gauges (5) allowing measurement of the thickness of the film of aqueous passivation solution before drying.
